# NEUE EUROPÄISCHE PATENTSCHRIFT

(11) **EP 1 624 961 B2**
(45) Veröffentlichungstag und Bekanntmachung des Hinweises auf die Entscheidung über den Einspruch: **23.06.2010**
(45) Hinweis auf die Patenterteilung: 03.01.2007
(21) Anmeldenummer: 04738510.9
(22) Anmeldetag: 06.05.2004
(51) Int. Cl.: B01J 19/18, C08G 63/78

(54) **VERFAHREN UND REAKTOR ZUR KONTINUIERLICHEN HERSTELLUNG VON POLYMEREN**
METHOD AND REACTOR FOR THE CONTINUOUS PRODUCTION OF POLYMERS
PROCEDE ET REACTEUR POUR LA PRODUCTION EN CONTINU DE POLYMERES

(30) Priorität: 09.05.2003 DE 10322106
(43) Veröffentlichungstag der Anmeldung: 15.02.2006
(73) Patentinhaber: Aquafil Engineering GmbH, 13469 Berlin (DE)
(72) Erfinder: KARASIAK, Wolf, 13467 Berlin (DE)
(74) Vertreter: Gross, Felix
(86) Internationale Anmeldenummer: PCT/DE2004/000995
(87) Internationale Veröffentlichungsnummer: WO 2004/101140

(56) Entgegenhaltungen:
- EP-A- 1 448 658
- EP-A- 1 478 677
- WO-A-03/042278
- FR-A- 1 545 487
- US-A- 6 096 838
- US-B- 4 289 895
- 'Die Bibliothek der Technik', Bd. 132, 1996, VERL. MODERNE INDUSTRIE, DEUTSCHLAND, ISBN 3-478-93148-7 Artikel HEINZ-DIETER SCHUMANN ET AL.: 'Polyester producing plants:principles and technology', Seiten 26 - 33
- 'PET-neue Entwicklungen und neue Märkte' KUNSTSTOFFFORSCHUNG Nr. 1/2001, 2001 - 2001, Seiten 24 - 25

## Beschreibung

Die Erfindung betrifft ein Verfahren zur kontinuierlichen Herstellung von Polymeren, insbesondere von Kondensaten und vorzugsweise Polyesterpolymeren aus den Ausgangsmaterialien für die Monomeren bzw Monomeren und deren Umsetzung zu den Polymeren in einem einzigen Reaktor mit mehreren Reaktionszonen und einem Reaktor in Kaskadenform, dessen letzte Kammer als Ringscheibenreaktor bzw. Disc-Cage-Reaktor ausgestaltet ist.

Es ist bekannt, für die Durchführung von kontinuierlich durchgeführten Polymerisationen mehrere in Reihe geschaltete liegende und stehende Reaktoren mit oder ohne eingebaute Rührwerke bzw. Mischorgane einzusetzen. Allen diesen Verfahren ist gemein, dass die Reaktoren mit unterschiedlichen Betriebsbedingungen betrieben werden, die sich in Druck und Temperatur unterscheiden. Die Reaktoren werden durch doppelwandige Rohrleitungen, die beheizt sind, verbunden. Der Transport des Produktes zwischen den verschiedenen Reaktoren erfolgt in der Regel durch Pumpen oder durch den unterschiedlichen Betriebsdruck.

Durch die Vielzahl der Reaktoren und verbindenden Elemente werden die Anlagen sehr groß, beanspruchen großflächige und mehrstöckige Gebäude, umfangreichen Montageaufwand und sind dadurch sehr teuer.

Ebenso ist aus der US-Patentschrift 3,761,059 ein Ringscheibenreaktor bekannt, der bei der Umsetzung von Prepolymeren zu Polymeren durch Kondensation eingesetzt wird. Dieser Ringscheibenreaktor wird als liegender Reaktor eingesetzt. Dieser Reaktor hat den Vorteil, dass er nur zum Teil mit Produkt gefüllt ist. Das umzusetzende Produkt wird mittels der Ringscheiben aus dem Sumpf herausgehoben und in dünnen Schichten in den Dampfraum befördert und fließt unter ständiger Erneuerung der Produktoberfläche nach unten.

Durch die Bildung der dünnen Schichten können die flüchtigen Teile im Polymer leicht entweichen und der Reaktionsprozess in günstiger Form beeinflusst werden. Obwohl das Rührorgan sich nicht ständig unter dem Niveau des Produktes befindet, wird es fortlaufend benetzt und immer wieder vom Produkt gespült und gewaschen.

Ein Nachteil dieser Ringscheibenreaktoren bzw. Disc-Cage-Reaktoren ist jedoch, dass sie erst ab einer bestimmten Produktviskosität effektiv arbeiten. Wenn die Viskosität zu gering ist, bleibt das Produkt nicht an den Ringscheiben hängen, es wird also nicht in den Gasraum transportiert und es kann keine ausreichenden Filme bilden. Vielmehr schneiden die Ringscheiben wie Messer durch Wasser.

Der Erfindung liegt die Aufgabe zugrunde, ein Verfahren und einen Reaktor zur kontinuierlichen Herstellung von Polymeren zu schaffen, das sich einfach ohne großen Anlagenaufwand bewerkstelligen lässt und eine Vorrichtung zur Durchführung des Verfahrens.

Erfindungsgemäß erfolgt die Herstellung des Polymeren durch Umsetzung der Ausgangsprodukte zu Monomeren bzw von Monomeren, durch weitere Umsetzung zu Prepolymeren und weiter zu den Polymeren in einem einzigen stehenden Reaktor, der in mindestens zwei, übereinander liegende Reaktionszonen unterteilt ist, von denen mindestens eine Zone einen Ringscheibenreaktor und / oder einen Disc-Cage Reaktor aufweist und die einzelnen Reaktionszonen mit unterschiedlichen Drucken und Temperatur betreibbar sind.

In einer besonderen Ausgestaltung des Verfahrens ist für die weitere Polymerisation ein Endreaktor nachgeschaltet. Dieser nachgeschaltete Endreaktor ist vorteilhafterweise ein Ringscheibenreaktor oder ein Disc-Cage-Reaktor. Anstelle eines Endreaktors kann auch eine sogenannte SSP (solid state polycondensation) nachgeschaltet werden.

Beim erfindungsgemäßen Verfahren werden die Ausgangsstoffe für die Herstellung der Monomere außerhalb des stehenden Reaktors miteinander in entsprechenden Verhältnissen gemischt und dann am Kopf in die oberste Reaktionsstufe eingeführt. Es besteht auch die Möglichkeit die Ausgangsstoffe getrennt in die erste Reaktionszone einzubringen. Hier erfolgt die Umsetzung zu den gewünschten Monomeren. Es wird kontinuierlich abgezogen und über Leitungen, die innerhalb oder außerhalb des Reaktors liegen können, in die darunterliegende Reaktionszone geführt.

Durch Verbindungsleitungen zwischen den Reaktionsstufen könne die bei der Monomer- oder Vorpolymer-Herstellunng enstehenden Dämpfe und Gase von einer Reaktionsstufe zu einer anderen Reaktionsstufe geleitet werden und anschließend ausgeschleußt werden.

Selbstverständlich können die bei der jeweiligen Reaktion entstehenden Dämpfe auch einzeln aus jeder Reaktionszone abgeführt werden.

Zur besseren Durchmischung und Beschleunigung der Reaktion kann in der ersten Reaktionszone des stehenden Reaktors ein Rührwerk vorgesehen sein. Hierbei kann das Rührwerk mittig oder außermittig angeordnet sein. Das Rührwerk selbst kann ein- oder beidseitig gelagert sein.

Die Reaktion kann bei Über-, Unter- oder Normaldruck erfolgen und durch Kühlung oder Erwärmung in der gewünschten Weise geführt werden. Die Kühlung bzw. Heizung wird durch einen an der äußeren Fläche des Reaktors angebrachten Mantel und/oder eingebaute Wärmetauscherelemente erreicht, die durch Kühl- oder Wärmemittel (dampfförmig oder flüssig) durchflossen werden.

Wie weiter oben ausgeführt, wird das Reaktionsprodukt aus der ersten Reaktionszone über Leitungen, die sich innerhalb oder außerhalb des Reaktors befinden können, in die zweite Reaktionszone überführt und dort zu Prepolymeren mit gewünschter Polymerenzahl bzw. gewünschter Viskosität umgesetzt. Durch die entweichenden niedrigsiedenden Kondensationsprodukte als Gase oder Dämpfe erfolgt eine ausreichende Umwälzung des Produktes, so dass ein in seiner Viskosität ausreichend einheitliches Produkt erhalten wird, das am unteren Ende der zweiten Reaktionszone abgezogen wird. Auch in dieser Reaktionszone kann in gewünschter Weise durch Über- oder Unterdruck auf den Reaktionsablauf Einfluss genommen werden. Ebenso ist auch hier am äußeren Umfang des Reaktors ein Mantel oder eingebaute Wärmetauscherelemente vorgesehen, der mit Kühl- oder Wärmemitteln gespeist werden kann.

In einer besonderen Ausgestaltung ist die zweite Reaktionszone durch Trennwände so gestaltet, dass eine Zwangsführung des Mediums erfolgt. Dabei wird z.B. das Medium schneckenförmig von außen nach innen oder in umgekehrter Richtung und dann nach unten zum Abfluss in die dritte Reaktionszone geführt.

Das Reaktionsprodukt wird in die dritte Reaktionszone über Leitungen an einer oder mehreren Stellen am äußeren Rand des Reaktors eingeschleust. In einer besonderen Ausgestaltung wird das Produkt der zweiten Reaktionszone vor Eintritt in die dritte Reaktionszone außerhalb des Reaktors auf eine höhere Temperatur erwärmt. Ansonsten ist auch der Reaktor an der dritten Reaktionszone mit einem Mantel umgeben oder mit innenliegenden Wärmetauscher versehen, die für die Zufuhr von Wärmemitteln bzw. Kühlmitteln dienen.

In der dritten Reaktionszone erfolgt die Umsetzung des Prepolymeren zum gewünschten Polymeren. Die bei der Umsetzung entstehenden Produkte mit niederen Verdampfungspunkten werden am Kopf der dritten Reaktionszone ausgeschleust und außerhalb des Reaktors weiterverarbeitet.

Im oberen Teil einer jeden Reaktionsstufe sind Einrichtungen vorgesehen, die das Mitreißen von Produktpartikeln in die nachgeschalteten Kondensatoren verringert.

Die dritte Reaktionszone ist erfindungsgemäß als Ringscheibenreaktor bzw. Disc-Cage-Reaktor ausgestaltet. In Anpassung des an sich bekannten Ringscheibenreaktors bzw. Disc-Cage-Reaktors an die Halbkugelform des erfindungsgemäßen Reaktors sind die an der Bewege- und Fördereinrichtung angebrachten Rührelemente in ihrem Durchmesser verschieden groß. Sie steigen von der Wandung des Reaktors zur Mitte hin an.

Um eine noch bessere und gleichmäßigere Kondensation zu erreichen, sind in der dritten Reaktionszone in der Halbkugel Trennwände und/oder Überläufe vorgesehen. Damit wird die gesamte dritte Reaktionszone in mehrere kleine Reaktionsstufen unterteilt, wobei der Materialfluss von außen nach innen erfolgt. Der Materialfluss wird dabei durch die Durchsatzmenge und die Drehzahl der Bewege- und Fördereirichtung bestimmt. Beim Bewegen fließt das mit den Rührelementen aufgenommene Material in die gleiche Kammer zurück. Über die Wehre fließt das Produkt von Kammer zu Kammer.

Für eine vollständige Entleerung der durch die Trennwände und/oder Überläufe gebildeten Kammern sind an der tiefsten Stelle in den Wänden Leerlaufbohrungen oder andere Leerlaufeinrichtungen vorgesehen.

Sollte die Viskosität der Schmelze in den äußeren kleinen Reaktionsstufen noch so niedrig sein, daß sie nicht ausreichend an den Rührelementen haften bleibt, so erfolgt der Transport des Materials an die Oberfläche durch an der Welle oder dem Tragrahmen bzw an den Scheiben oder Rührelementen angebrachten Schöpfelementen.

Der Durchmesser der einzelnen Rührelemente, beispielsweise Ringscheiben, ist so groß, dass zwischen der Wandung des Reaktors und dem äußeren Rand der Rührelemente nur ein kleiner Spalt verbleibt.

Das Niveau des Reaktionsmediums in den einzelnen kleinen Reaktionsstufen wird durch die Höhe der Überläufe bestimmt.

Die Rührelemente der Rührorgane sind an diesen so angebracht, dass der Mittelpunkt der Rührelemente in der Rotationsachse der Rührorgane liegt. Dadurch wird erreicht, dass jedes Rührelement bei seiner Drehung um die Achse der Rührorgane eine symmetrische Bewegung ausführt. Ein Vorteil ist darin zu sehen, dass ohne Beeinträchtigung der Bewege- und Fördereinrichtung bei jeder Umdrehung an den Rührelementen haftendes und dadurch emporgehobenes Material erneuert wird. Alle in den fließfähigen Stoff eintauchenden Teile werden bei entsprechendem Niveau während des Ablaufes einer voller Drehung benetzt.

Beim Eintauchen nicht benetzte Teile der Rührelementeflächen werden während der Drehbewegung von dem auf den benetzten Flächen haftenden Material allmählich schlierenartig bedeckt. Diese Schlieren gelangen dann, wie auch das anhaftende Material bei völliger Benetzung der Rührelementeflächen, an den inneren Flächenrand und fallen schleierbildend in den fließfähigen Stoff ab.

Vorteilhaft können bei Verwendung von Ringscheiben die Rührelemente so aufgebaut sein, dass die Ringflächen der Ringscheiben gelocht oder geschlitzt ausgebildet sind. Besonders vorteilhaft sind Ausführungsformen, bei denen die gelochten oder geschlitzten Ringscheiben mit größeren Öffnungen ausgebildet sind, je höher die Viskosität ist. Dadurch kann eine sich während des Prozesses ändernde Viskosität für einen optimalen Verfahrensablauf auf einfache Weise berücksichtigt werden.

Ebenso vorteilhaft ist für den gleichen Zweck eine Anordnung der Rührelemente mit unterschiedlichen Abständen voneinander und zwar von außen nach innen kleiner oder größer werdend. Entsprechend des gewünschten Reaktionsablaufes können auch die Abstände zwischen den einzelnen Trenn- bzw. Überlaufelementen frei gewählt werden. Ebenso ist die Anordnung einer unterschiedlichen Anzahl von Rührelementen in den einzelnen kleineren Reaktionsstufen der dritten Reaktionszone frei wählbar. Es muss nur gewährleistet sein, dass in jedem Fall ein in seinen Eigenschaften weitgehend gleichmäßiges Produkt erhalten wird. Dazu muß gewährleistet sein, daß die Rührelemente das Produkt bewegen, zur Filmbildung veranlassen und/oder aus dem Produktsumpf in den Dampfraum fördern.

In vorteilhafter Weise ist mindestens eine Endscheibe des Tragrahmens elastisch konstruiert. Damit wird gewährleistet, daß thermische Ausdehnungen zwischen Reaktorwand und Rührorgan vom Rührorgan und nicht von der eigentlichen Wellenlagerung aufgenommen werden.

Nach Überwindung der letzten Trennwand bzw. des letzten Überlaufwehres wird das fertige Produkt in der Mitte am untersten Punkt des stehenden Reaktors abgezogen.

Sollte der gewünschte Polymerisationsgrad noch nicht erreicht sein, kann das im stehenden Reaktor erhaltene Produkt in einen nachgeschalteten liegenden Ringscheibenreaktor bzw. Disc-Cage-Reaktor überführt werden. Ebenso besteht die Möglichkeit das erhaltene Produkt zu granulieren und in einem weiteren separaten Prozeß, zB SSP weiter zu verarbeiten.

Der nachgeschaltete Ringscheibenreaktor ist ein einfacher Kessel mit eingebautem Rührorgan. Es ist vorteilhaft, wenn die als Rührelemente eingesetzten geometrischen Teile mit geringem Spiel am unteren Teil des Reaktors vorbeistreichen.

Das Material wird kontinuierlich an einem Ende des nachgeschalteten Ringscheibenreaktors eingeführt und zum anderen Ende gefördert, wobei es laufend als dünner Film auf den Rührelementen aus der Schmelze herausgeführt wird und unter Reaktion in die Schmelze zurückläuft. Am anderen Ende wird das gewünschte Polymerisat ausgeschleust. Die entstehenden niedrigsiedenden Produkte werden oberhalb der Schmelze aus dem Reaktor entfernt.

Sowohl beim im stehenden Reaktor in der dritten Reaktionszone als auch in dem nachgeschalteten liegenden Reaktor vorgesehenen Rührorganen können die als Rührelemente vorgesehenen geometrischen Elemente mit unterschiedlicher Neigung auf der Welle oder dem Tragrahmen angeordnet sein.

Die Erfindung soll nachfolgend anhand der Zeichnungen näher erläutert werden.

Es zeigen:
- Fig. 1 -: eine Variante des erfindungsgemäßen Reaktors, im Schnitt
- Fig. 2 -: eine weitere Variante des erfindungsgemäßen Reaktors mit nachgeschaltetem Endreaktor, im Schnitt
- Fig. 3a-k -: unterschiedliche Ausgestaltungen einer Ringscheibe bzw eines Rührelementes,
- Fig. 4a-g -: unterschiedliche Ausgestaltungen der Rührelemente in Draufsicht
- Fig. 5a und b -: Zwangsführungen für das Material in der zweiten Reaktionszone B des Reaktors 1 in Draufsicht;
- Fig. 6a-c -: Detailzeichungen der untersten Reaktionszone.

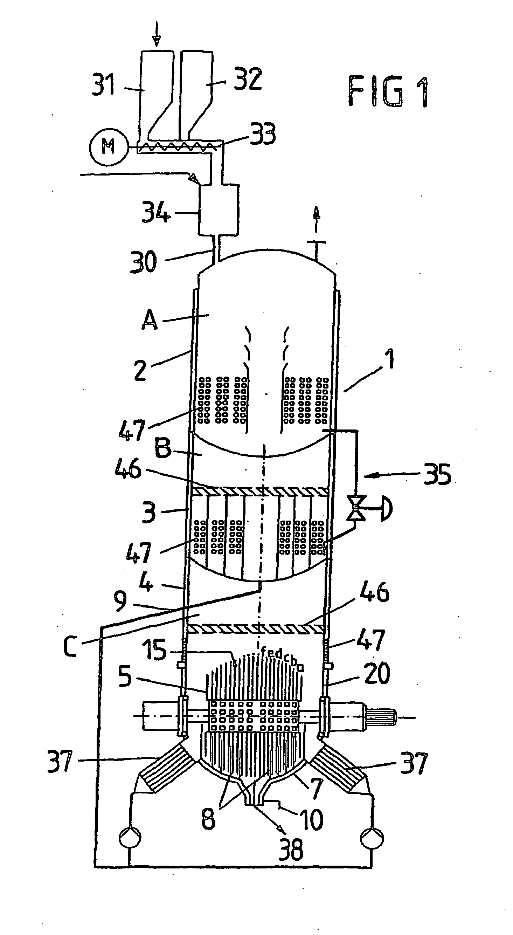

Figur 1 zeigt den stehenden Reaktor 1 für die Herstellung von Polyestern. Grundsätzlich sind jedoch auch andere Polymere mit dem erfindungsgemäßen Reaktor herstellbar.

Der Reaktor 1 weist drei, im stehenden Reaktor übereinander liegende Reaktionzonen A, B, C auf.

Die Ausgangsmaterialien 31, 32 zur Herstellung der Monomere als Ausgangsprodukt für das gewünschte Polymer werden außerhalb des Reaktors 1 in einem Mischer 33 gemischt und aus einem Vorratsbehälter 34 über Leitung 30 oben in den Reaktor 1 eingeführt. Die Einführung der Mischung aus den Rohmaterialien kann auch unten in die Reaktionszone A eingeführt werden.

In der ersten Reaktionszone A des Reaktors 1 erfolgt die Umsetzung der Ausgangsmaterialien zum Monomer. Die Monomere werden über die erste Leitung 35 abgezogen und unterhalb des Flüssigkeitsstandes der Masse in der zweiten Reaktionszone B eingeführt. In der zweiten Reaktionszone erfolgt die weitere Umsetzung zum Monomeren bzw eine Anpolymerisation der Monomere. Die Anpolymerisation wird in gewünschter Weise durch die Reaktionstemperatur und/oder den Druck gesteuert.

Für die Beeinflussung der Reaktionstemperatur ist der Reaktor 1 durch einen Heizmantel umschlossen und/oder mit Wärmetauschern 47 versehen. Jeder der Reaktionszonen A, B, C können Mantelsegmente 2,3,4 separat zugeordnet sein oder der Heizmantel und/oder die Wärmetauscher 47 werden insgesamt mit Kühl- oder Erwärmungsmitteln gespeist.

Für die Verringerung des Mitreißens von Produktpartikeln in die nicht dargestellten Kondensatoren und um sie in die Reaktionszone zurückzuführen, können in den einzelnen Reaktionszonen Abscheider 46 vorgesehen sein.

Nach dem Erreichen der gewünschten Viskosität des Prepolymeren in der zweiten Reaktionszone B wird dieses am untersten Ende der zweiten Reaktionszone B über eine Leitung 9 entnommen. Die Prepolymere werden nach Aufheizung in zusätzlich außerhalb der Anlage vorgesehenen Heizeinrichtungen 37 am äußeren Rand an einer oder mehreren Stellen in die dritte Reaktionszone C eingeschleust.

In der dritten Reaktionszone C ist ein Ringscheiben- oder Disc-Cage-Reaktor angeordnet, wobei die Wandung des Reaktors 1 am unteren Ende als Halbkugel oder Teil einer Halbkugel 7 ausgestaltet ist. Zur Umwälzung und Bewegung des Materials ist ein Rührorgan 5 vorgesehen. Das Rührorgan 5 besteht aus einer Hohlwelle 12, auf der Mischmittel 15a bis k, wie z.B. Ringscheiben, Ringsegmente, schöpfelementeförmige Profile u.ä. angeordnet sind. Zur besseren Steuerung der Polymerisation sind in der Halbkugel 7 Trennwände und/oder Überlaufwehre 8 vorgesehen.

Zwischen den einzelnen Trennwänden und/oder Überlaufwehren 8 sind ein oder mehrere der Mischmittel 15 vorgesehen. Durch die Mischmittel 15, z.B. Ringscheiben, die senkrecht oder geneigt angeordnet sind, wird der Materialfluss erreicht. Der Reaktionsablauf wird so gesteuert, dass die Polymere nach Erreichen der durch die Trennwände bzw. Überlaufwehre 8 gebildeten mittleren Zone den gewünschten Polymerisationsgrad erreicht haben. Die Polymere werden aus dem Reaktor 1 dann durch die Leitung 38 ausgeschleust.

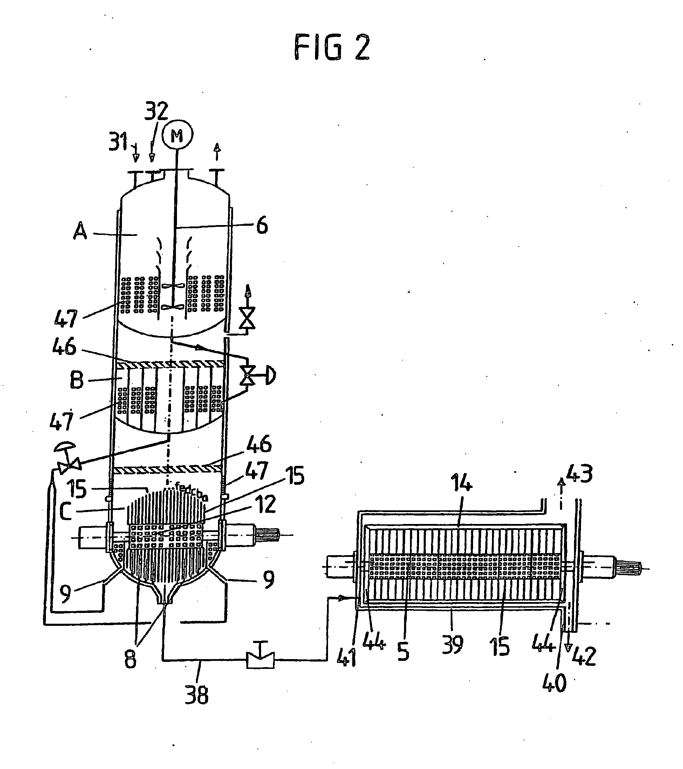

Figur 2 zeigt den stehenden Reaktor 1, der im Wesentlichen dem in Figur 1 beschriebenen Reaktor 1 gleicht, mit nachgeschaltetem liegenden Endreaktor 39. In Abwandlung zum Reaktionsablauf, wie er zur Figur 1 beschrieben wurde, werden die Ausgangsmaterialien 31, 32 ohne vorherige Mischung direkt in die erste Reaktionszone A des stehenden Reaktors 1 eingeführt.

Bei dieser Variante wird die Umsetzung zum Monomeren durch ein Rührwerk 6 unterstützt. Das Reaktionsprodukt wird aus der ersten Reaktionszone A in die zweite Reaktionszone B wie bei der Beschreibung zur Figur 1 überführt. In Abwandlung wird das Reaktionsprodukt der zweiten Reaktionszone B über die Leitung 9 direkt am äußeren Rand an ein oder mehreren Stellen des Reaktors 1 in die dritte Reaktionszone C eingeführt. Am Einlass können nicht gezeigte Heizelemente vorgesehen sein.

In der dritten Reaktionszone C ist - wie bei Figur 1 beschrieben - ein Ringscheibenreaktor oder Disc-Cage-Reaktor angeordnet. Die Rührelemente bestehen hier aus mit Löchern 16 versehenen Ringscheiben. Die Reaktion der Prepolymeren zu den Polymeren wird bei dieser Variante nur bis zu einer bestimmten Viskosität bzw. zu einem bestimmten Molekulargewicht betrieben und dann das am Ablauf 38 abgezogenen Material in einen nachgeschalteten Endreaktor 39 überführt. Der Endreaktor 39 besteht aus einem an sich bekannten Ringscheiben- bzw. Disc-Cage-Reaktor. Im Endreaktor 39 wird die Polymerisation zu Ende geführt.

Der Ringscheibenreaktor ist ein mantelbeheizter Doppelwandkessel mit Heizraum 40. Das am Einlass 41 eingeführte Material wird vom Rührorgan 5 vom Einlass 41 zum Auslass 42 gefördert, dabei gemischt, durchgerührt und einer großen Oberflächeneinwirkung für die weiteren Polymerisation unterworfen.

Für die Abführung von Dämpfen oder Gasen ist ein Auslass 43 vorgesehen.

Das Rührorgan 5 ist im Prinzip so aufgebaut, wie es für die dritte Reaktionszone C der Figur 1 beschrieben wurde. In Abänderung ist keine Welle 11, sondern ein drehbarer Tragrahmen, der aus den Stirnscheiben 44 und den Längsholmen 14 besteht, vorgesehen. An den Längsholmen 14 sind die Mischmittel 15, z.B. Ringscheiben, befestigt. Die einzelnen Ringscheiben 15 sind geneigt an den Längsholmen 14 befestigt. Ebenso können Schöpfelemente anstelle der Ringscheiben 15 vorgesehen sein oder die Schöpfelemente sind zusätzlich an den Rindscheiben 15 angeordnet.

Die Längsholme 14 können rund oder profiliert ausgeführt werden. Ebenso können in den Längsholmen 14, insbesondere bei Anwendung von Profilen, Lochungen vorgesehen sein. Die Lochungen dienen dem besseren Ablauf der viskosen Masse bei der Reaktion während des Durchlaufes durch den Endreaktor 39.

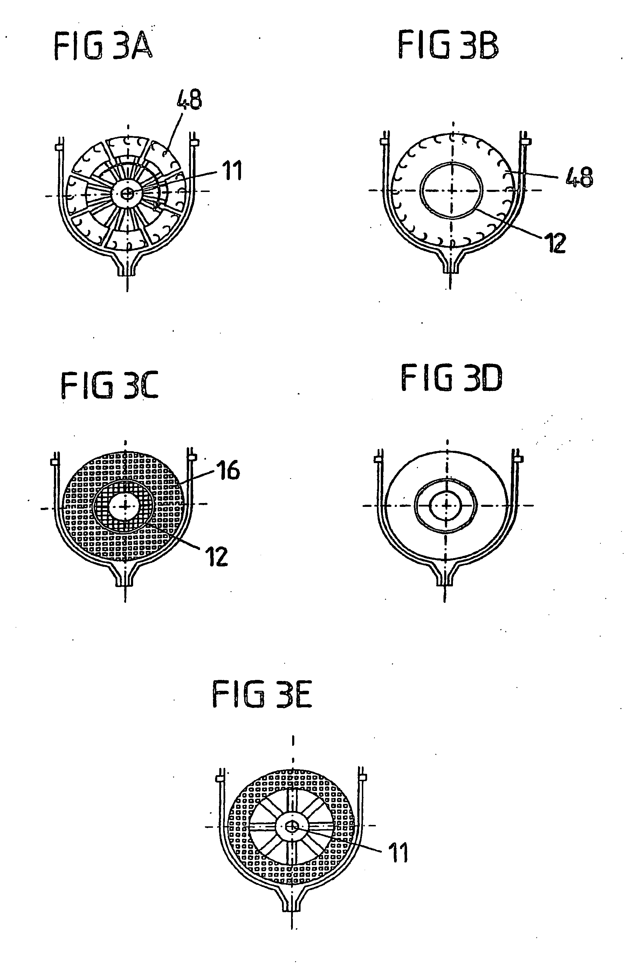

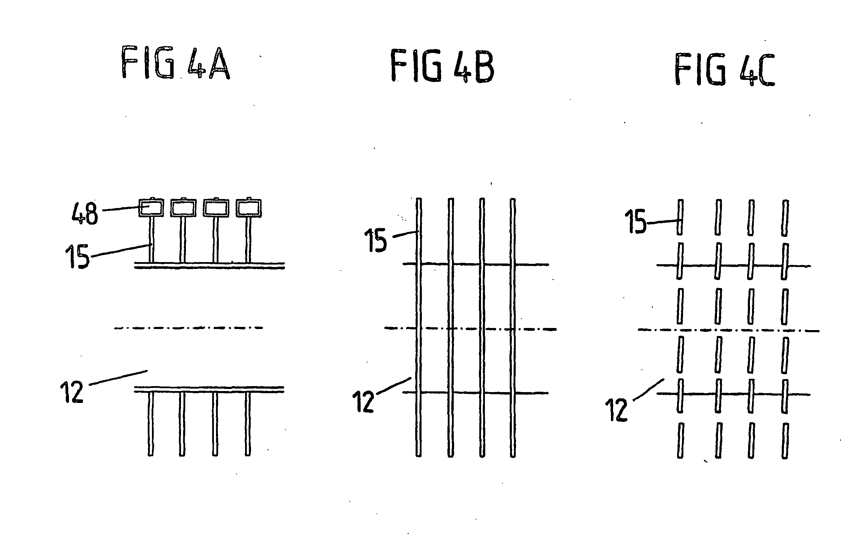

In den Figuren 3a bis 3k und den Figuren 4a bis 4g sind beispielhafte Ausgestaltungen der Rührorgane 15 gezeigt ohne sie darauf zu beschränken.

Figur 3a zeigt ein Rührorgan mit Welle 11, mit Ringscheibensegmenten, an denen Schöpfelemente 48 angeordnet sind.

Figur 3b zeigt ein Rührorgan mit Hohlzylinder 12, mit Ringscheiben, dan denen Schöpfelemente 48 angeordnet sind.

Figur 3c zeigt eine Ringscheibe, die über die gesamte Fläche in gleichmäßigen Abständen Löcher 16 aufweist. Die Ringscheibe befindet sich auf dem Hohlzylinder in dessen Inneren sich ebenfalls eine gelochte Ringscheibe befindet.

Figur 3d besteht aus einer Ringscheibe.

Figur 3e zeigt einen durchlöcherten Ringkranz, der durch mehrere Streben auf der Welle 11 gehalten wird.

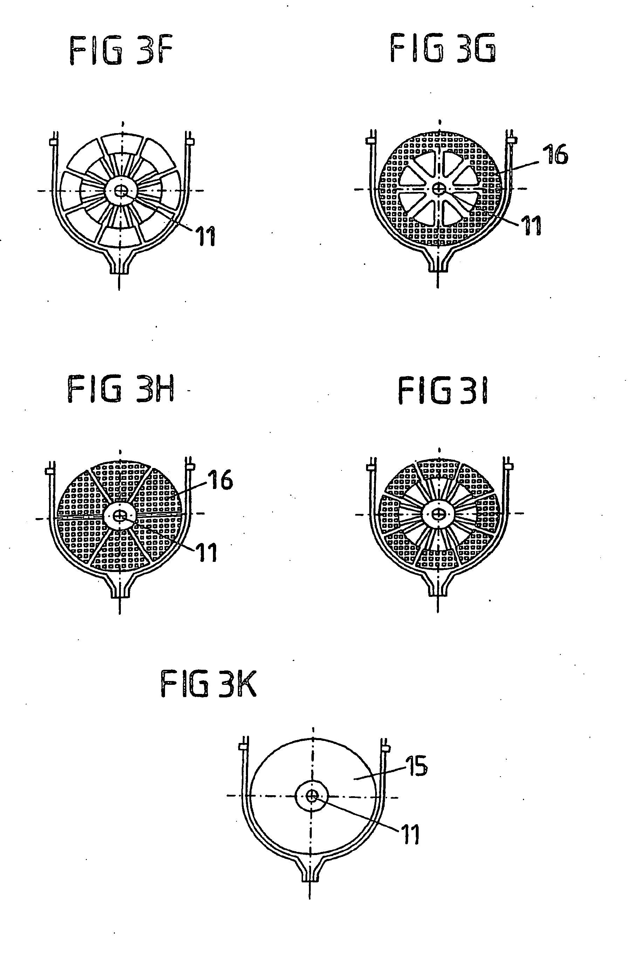

Figur 3f zeigt Ringkranzsegmente, die jeweils über zwei als Rührorgane wirkende Streben auf der Welle angeordnet sind.

Figur 3g zeigt eine Abwandlung der in Figur 3e gezeigten Variante.

Figur 3h zeigt mehrere auf der Welle 11 angeordnete durchlochte Ringsegmente.

Figur 3i zeigt gelochte Ringkranzsegmente, die jeweils durch zwei Streben auf der Welle 11 angeordnet sind.

Figur 3k zeigt eine Vollscheibe als Rührelement.

In Figur 4a wird eine Variante des Rührorganes gezeigt, bei der die Schöpfelemente 48 auf dem Ringscheiben 15 angeordnet sind. Die Ringscheiben befinden sich auf dem Hohlzylinder 12.

Die Figuren 4b bzw 4c zeigen Rührelemente als Ringscheibe bzw Ringscheibensegmente.

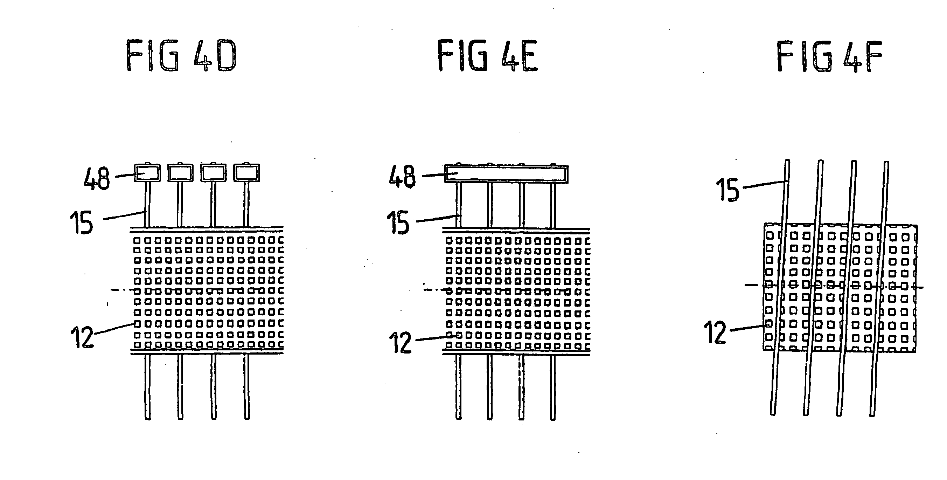

Figur 4d zeigt die gleiche Anordnung wie Fig. 4a, jedoch ist der Hohlzylinder gelocht.

Figur 4e zeigt eine Abwandlung von Figur 4d bei der mehrere nebeneinanderliegende Schöpfelemente 48 zu einem größeren Schöpfelement zusammengefaßt wurden.

In Figur 4f ist eine Variante mit schräggestellten Ringscheiben dargestellt.

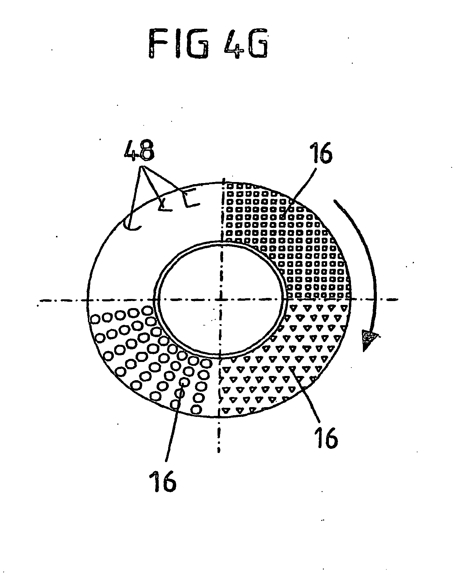

Figur 4g zeigt unterschiedliche Varianten der Lochungen 16 und Schöpfelemente 48 die einzeln aber auch in Kombination verwendet werden können.

Die in den Figuren 1 und 2 eingezeichneten Ringscheiben 15 bzw. 15a bis k können die in den Figuren 3a-k gezeigten Ausgestaltungen aufweisen. Sie bestehen beispielsweise aus einem flachen Kreisringblatt, das mit einer Vielzahl von Löchern 16 versehen ist. Diese Ringscheibe wird im Bereich ihres Umfangs mit den Längsholmen 14 verbunden, z.B. dadurch, dass die Längsholme 14 durch die Ringscheibe geführt und verschweißt werden. Ebenso können die Ringscheiben 15 oder andere als Rührorgane eingesetzte Mischmittel an ihren Außenflächen bzw. Innenflächen mit den Längsholmen 14 verbunden sein.

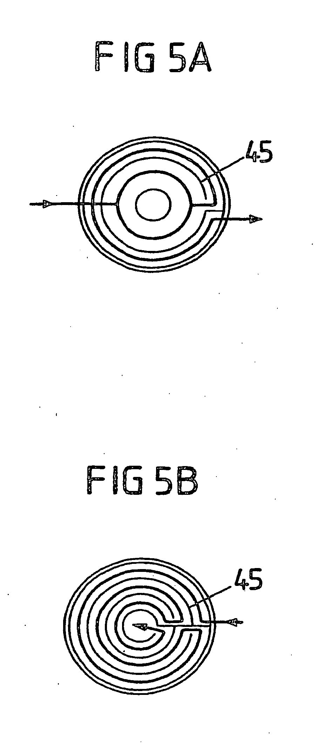

Die Figuren 5a und b zeigen Möglichkeiten der Zwangsführung des Produktes in der zweiten Reaktionszone B des Reaktors
1. Diese Anordnungen bestehen aus in sich gewundenen Trennwänden 45, die das Material von außen nach innen oder in umgekehrter Richtung und dann nach unten in die dritte Reaktionsstufe führen. Dadurch wird eine verbesserte Homogenität des Monomeren oder Prepolymeren erreicht.

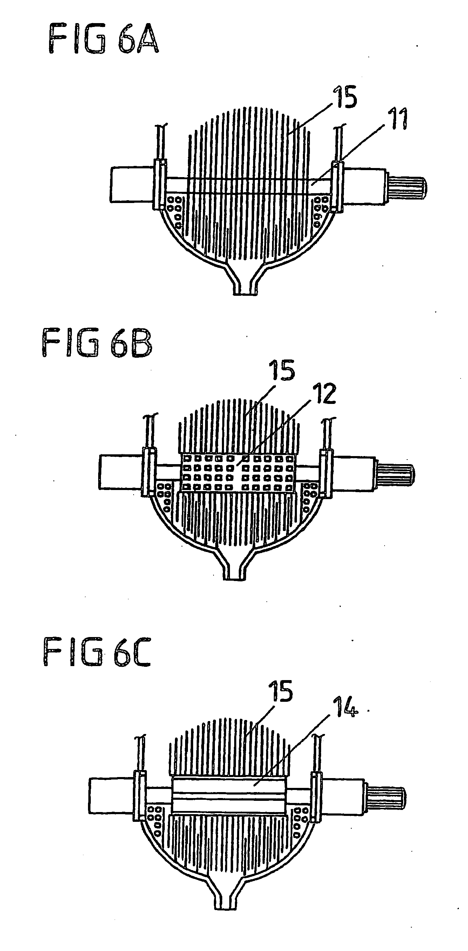

Die Figuren 6a bis 6c zeigen unterschiedliche Varianten der untersten Reaktionszone. Dabei sind unterschiedliche Tragkonstruktionen für die Scheiben 15 dargestellt. Figur 6a zeigt eine Welle 11, Figur 6b zeigt einen Hohlzylinder (Cage, Käfig) und Figur 6c zeigt eine Tragrahmenkonstuktion.

## Patentansprüche

1. Verfahren zur kontinuierlichen Herstellung von Polymeren,
**dadurch gekennzeichnet, dass**
die Herstellung der Monomeren und der Polymere in einem stehenden Reaktor mit mindestens zwei, vertikal übereinander liegenden Reaktionszonen erfolgt, von denen mindestens eine Zone einen Ringscheibenreaktor und / oder einen Disc-Cage Reaktor aufweist.

2. Verfahren nach Anspruch 1, **gekennzeichnet durch** einen nachgeschalteten Endreaktor (39).

3. Verfahren nach Anspruch 1 oder 2, **gekennzeichnet durch** eine nachgeschaltete Solid-State-Polykondensationsstufe (SSP).

4. Verfahren nach mindestens einem der vorhergehenden Ansprüche, **dadurch gekennzeichnet, dass** Polykondensate und / oder Polyester hergestellt werden.

5. Verfahren nach mindestens einem der vorhergehenden Ansprüche, **dadurch gekennzeichnet, dass** mindestens ein Rohstoff direkt in den Reaktor (1) eingespeist wird.

6. Verfahren nach mindestens einem der vorhergehenden Ansprüche, **dadurch gekennzeichnet, dass** mindestens ein Rohstoff als pastöse Mischung direkt in den Reaktor (1) eingespeist wird.

7. Verfahren nach mindestens einem der vorhergehenden Ansprüche, **dadurch gekennzeichnet, dass** der Materialfluss im Inneren des stehenden Reaktors (1) zumindest zwischen zwei Reaktionszonen in Richtung der Schwerkraft erfolgt.

8. Verfahren nach mindestens einem der vorhergehenden Ansprüche, **dadurch gekennzeichnet, dass** der Materialfluss im Inneren des Reaktors (1) zumindest zwischen zwei Reaktionszonen entgegen der Schwerkraft erfolgt.

9. Verfahren nach mindestens einem der vorhergehenden Ansprüche, **dadurch gekennzeichnet, dass** die Herstellung des oder der Monomeren in einer Reaktionszone (A) oberhalb der Mitte des Reaktors (1) und die Herstellung des Polymeren unterhalb der Mitte des Reaktors (1) erfolgen.

10. Verfahren nach mindestens einem der vorhergehenden Ansprüche, **dadurch gekennzeichnet, dass** die Herstellung des oder der Monomeren in einer Reaktionszone (A) unterhalb der Mitte des Reaktors (1) und die Herstellung des Polymeren oberhalb der Mitte des Reaktors (1) erfolgen.

11. Verfahren nach mindestens einem der vorhergehenden Ansprüche, **dadurch gekennzeichnet, dass** eine Endreaktion im nachgeschalteten Endreaktor (39) erfolgt.

12. Verfahren nach mindestens einem der vorhergehenden Ansprüche, **dadurch gekennzeichnet, dass** die einzelnen Reaktionszonen (A, B, C) mit unterschiedlichen Drücken und Temperaturen betrieben werden.

13. Verfahren nach mindestens einen der vorhergehenden Ansprüche, **dadurch gekennzeichnet, dass** die Monomere vor Eintritt in die Reaktionszone(n) zur Umsetzung in die d Polymeren auf die notwendige Reaktionstemperatur erhitzt werden.

14. Verfahren nach mindestens einem der vorhergehenden Ansprüche, **dadurch gekennzeichnet, dass** die Monomeren nach Eintritt in die Reaktionzone(n) zur Umsetzung zum Polymeren durch innenliegende Wärmetauscher auf die notwendige Reaktionstemperatur erhitzt werden.

15. Stehender Reaktor zur Durchführung der Verfahren nach Anspruch 1 bis 14,
**dadurch gekennzeichnet, dass**
der Reaktor (1) in mindestens zwei übereinander liegende Reaktionszonen unterteilt ist, von denen mindestens eine Zone einen Ringscheibenreaktor und / oder einen Disc-Cage Reaktor aufweist und die einzelnen Reaktionszonen (A, B, C) mit unterschiedlichen Drücken und Temperaturen betreibbar sind.

16. Reaktor nach Anspruch 15, **gekennzeichnet durch** mehrere Heizzonen mit innen- oder aussenliegenden Heiz- oder Kühleinrichtungen.

17. Reaktor nach Anspruch 15 oder 16, **dadurch gekennzeichnet, dass** in einer oder mehreren Reaktionsstufen Einrichtungen (46) vorgesehen sind, die das Mitreißen von Produktpartikeln in die nachgeschalteten Kondensatoren verhindern.

18. Reaktor nach mindestens einem der Ansprüche 15 bis 17, **dadurch gekennzeichnet, dass** in einer oder mehreren Reaktionszonen des Reaktors ein- oder beidseitig gelagerte Rührorgane (5, 6) vorgesehen sind.

19. Reaktor nach mindestens einem der Ansprüche 15 bis 18, **dadurch gekennzeichnet, dass** eine der Reaktionszonen, insbesondere die unterste Reaktionszone als Ringscheibenreaktor- oder Disc Cage Reaktor (20) ausgeführt ist.

20. Reaktor nach mindestens einem der Ansprüche 15 bis 19, **dadurch gekennzeichnet, dass** die Reaktorwandung im Ringscheiben- oder Disc Cage Reaktor-Bereich (20) als Halbkugel oder Teil einer Halbkugel (7) ausgebildet ist.

21. Reaktor nach Anspruch 20, **dadurch gekennzeichnet, dass** die Halbkugel oder Teile einer Halbkugel (7) mit Trennwänden und/oder Überlaufwehren (8) versehen ist.

22. Reaktor nach mindestens einem der Ansprüche 15 bis 21, **dadurch gekennzeichnet, dass** ein Produkteinlauf (9) bei der Ausführung des Ringscheiben- oder Disc Cage-Bereiches (20) als Halbkugel (7) im äusseren Bereich und der Ablauf (10) des fertigen Produktes mittig angeordnet ist.

23. Reaktor nach mindestens einem der Ansprüche 15 bis 22, **dadurch gekennzeichnet, dass** ein Produkteinlauf (9) bei der Ausführung des Ringscheiben- oder Disc Cage-Bereiches (20) als Halbkugel (7) an zwei oder mehreren Stellen im äußeren Bereich erfolgt.

24. Reaktor nach mindestens einem der Ansprüche 15 bis 23, **dadurch gekennzeichnet, dass** die Trennwände und/oder Überlaufwehre (8) für eine vollständige Entleerung Leerlaufeinrichtungen besitzen.

25. Reaktor nach mindestens einem der Ansprüche 15 bis 24, **dadurch gekennzeichnet, dass** im Ringscheiben- oder Disc-Cagereaktor (20) als Rührorgane (5) mit Rührelementen (15) besetzte Wellen (11) oder Hohlezylinder (cage= oder Längsholmen (14) vorgesehen sind.

26. Reaktor nach mindestens einem der Ansprüche 15 bis 25, **dadurch gekennzeichnet, dass** die Längsholme (14) rund und / oder profiliert ausgeführt sind.

27. Reaktor nach mindestens einem der Ansprüche 15 bis 26, **dadurch gekennzeichnet, dass** in den Längsholmen (14) oder Hohlzylindern (12) Lochungen vorgesehen sind.

28. Reaktor nach mindestens einem der Ansprüche 15 bis 27, **dadurch gekennzeichnet, dass** als Rührelemente (15) geo-Mischmittel, insbesondere Ringscheiben, Ringsegmente, schöpfelementförmige Profile, an Ringscheiben oder an geometrischen Teilen angeordnete Schöpfelemente o.ä. vorgesehen sind.

29. Reaktor nach mindestens einem der Ansprüche 15 bis 28, **dadurch gekennzeichnet, dass** die als Rührelemente (15) eingesetzten Mischmittel senkrecht oder schräg mit gleicher oder unterschiedlicher Neigung zueinander auf der Welle (11), dem Hohlzylinder (12) bzw. Tragrahmen (14) angeordnet sind.

30. Reaktor nach mindestens einem der Ansprüche 15 bis 29, **dadurch gekennzeichnet, dass** die als Rührelemente (15) eingesetzten Mischmittel mit gleichen oder unterschiedlichen Abständen zueinander angeordnet sind.

31. Reaktor nach mindestens einem der Ansprüche 15 bis 30, **dadurch gekennzeichnet, dass** die als Rührelemente (15) eingesetzten Mischmittel durchgehend glatt oder mit Durchbrechungen (16) versehen sind.

32. Reaktor nach mindestens einem der Ansprüche 15 bis 31, **dadurch gekennzeichnet, dass** die als Rührelemente (15) eingesetzten Mischmittel innerhalb, ausserhalb oder innerhalb und ausserhalb an den Längsholmen (14) oder dem Hohlzylinder (12) angeordnet sind.

33. Reaktor nach mindestens einem der Ansprüche 15 bis 32, **dadurch gekennzeichnet, dass** die als Rührelemente (15) eingesetzten Mischmittel aus Blechen, Blechabschnitten, Rohren, Profilstäben, Schöpfelementen u. ä. bestehen.

34. Reaktor nach mindestens einem der Ansprüche 15 bis 33, **dadurch gekennzeichnet, dass** dem Reaktor (1) ein Ringscheibenreaktor bzw Disc Cage Reaktor (39) und / oder eine SSP (solid state polycondensation) als Endreaktor nachgeschaltet ist.

## Claims

1. A process for the continuous production of polymers, **characterized in that** the production of the monomers and the polymers is carried out in a vertical reactor having at least two, vertically superposed reaction zones of which at least one zone comprises an annular disk reactor and/or a disk-cage reactor.

2. The process as claimed in claim 1, **characterized by** a downstream end reactor (39).

3. The process as claimed in claim 1 or 2, **characterized by** a downstream solid-state polycondensation stage (SSP).

4. The process as claimed in at least one of the preceding claims, **characterized in that** polycondensates and/or polyesters are produced.

5. The process as claimed in at least one of the preceding claims, **characterized in that** at least one raw material is fed directly into the reactor (1).

6. The process as claimed in at least one of the preceding claims, **characterized in that** at least one raw material is fed as a paste-like mixture directly into the reactor (1).

7. The process as claimed in at least one of the preceding claims, **characterized in that** the material flow in the interior of the vertical reactor (1) occurs in the direction of gravity between at least two reaction zones.

8. The process as claimed in at least one of the preceding claims, **characterized in that** the material flow in the interior of the reactor (1) occurs in the direction opposite to gravity between at least two reaction zones.

9. The process as claimed in at least one of the preceding claims, **characterized in that** the production of the monomer or monomers occurs in a reaction zone (A) above the middle of the reactor (1) and the production of the polymer occurs below the middle of the reactor (1).

10. The process as claimed in at least one of the preceding claims, **characterized in that** the production of the monomer or monomers occurs in a reaction zone (A) below the middle of the reactor (1) and the production of the polymer occurs above the middle of the reactor (1).

11. The process as claimed in at least one of the preceding claims, **characterized in that** an end reaction occurs in the downstream end reactor (39).

12. The process as claimed in at least one of the preceding claims, **characterized in that** the individual reaction zones (A, B, C) are operated at different pressures and temperatures.

13. The process as claimed in at least one of the preceding claims, **characterized in that** the monomers are heated to the required reaction temperature before entering the reaction zone(s) for conversion into the polymers.

14. The process as claimed in at least one of the preceding claims, **characterized in that** the monomers are heated to the required reaction temperature by means of internal heat exchangers after entering the reaction zone(s) for conversion into the polymer.

15. A vertical reactor for carrying out the process as claimed in any of claims 1 to 14, **characterized in that** the reactor (1) is divided into at least two superposed reaction zones of which at least one zone comprises an annular disk reactor and/or a disk-cage reactor and that the individual reaction zones (A, B, C) can be operated at different pressures and temperatures.

16. The reactor as claimed in claim 15, **characterized by** a plurality of heating zones having internal or external heating or cooling devices.

17. The reactor as claimed in claim 15 or 16, **characterized in that** devices (46) which prevent carry-over of product particles into the downstream condensers are provided in one or more reaction stages.

18. The reactor as claimed in at least one of claims 15 to 17, **characterized in that** stirring devices (5, 6) mounted at one or both ends are provided in one or more reaction zones of the reactor.

19. The reactor as claimed in at least one of claims 15 to 18, **characterized in that** one of the reaction zones, in particular the bottommost reaction zone, is configured as an annular disk reactor or a disk-cage reactor (20).

20. The reactor as claimed in at least one of claims 15 to 19, **characterized in that** the reactor wall in the region of the annular disk reactor or disk-cage reactor (20) is configured as a hemisphere or part of a hemisphere (7).

21. The reactor as claimed in claim 20, **characterized in that** the hemisphere or part of a hemisphere (7) is provided with dividing walls and/or overflow weirs (8).

22. The reactor as claimed in at least one of claims 15 to 21, **characterized in that** in the case of the annular disk region or disk-cage region (20) being configured as a hemisphere (7), a product inlet (9) is arranged in the outer region and the outlet (10) for the finished product is arranged centrally.

23. The reactor as claimed in at least one of claims 15 to 22, **characterized in that** in the case of the annular disk region or disk-cage region (20) being configured as a hemisphere (7), a product inlet (9) is arranged at two or more points in the outer region.

24. The reactor as claimed in at least one of claims 15 to 23, **characterized in that** the dividing walls and/or overflow weirs (8) have drainage facilities to allow complete emptying.

25. The reactor as claimed in at least one of claims 15 to 24, **characterized in that** shafts (11) or hollow cylinders (cages) or longitudinal spars (14) fitted with stirring elements (15) are provided as stirring devices (5) in the annular disk reactor or disk-cage reactor (20).

26. The reactor as claimed in at least one of claims 15 to 25, **characterized in that** the longitudinal spars (14) are round and/or profiled.

27. The reactor as claimed in at least one of claims 15 to 26, **characterized in that** perforations are provided in the longitudinal spars (14) or hollow cylinders (12).

28. The reactor as claimed in at least one of claims 15 to 27, **characterized in that** geometrical mixing means, in particular annular disks, segments of annular disks, scoop-shaped profiles, scooping elements located on annular disks or on geometric parts or the like are provided as stirring elements (15).

29. The reactor as claimed in at least one of claims 15 to 28, **characterized in that** the mixing means used as stirring elements (15) are arranged perpendicularly or obliquely with identical inclination or different inclinations to each other on the shaft (11), the hollow cylinder (12) or the support frame (14).

30. The reactor as claimed in at least one of claims 15 to 29, **characterized in that** the mixing means used as stirring elements (15) are arranged at equal or different distances from one another.

31. The reactor as claimed in at least one of claims 15 to 30, **characterized in that** the mixing means used as stirring elements (15) are continuously smooth or provided with perforations (16).

32. The reactor as claimed in at least one of claims 15 to 31, **characterized in that** the mixing means used as stirring elements (15) are arranged inside, outside or inside and outside on the longitudinal spars (14) or the hollow cylinder (12).

33. The reactor as claimed in at least one of claims 15 to 32, **characterized in that** the mixing means used as stirring elements (15) comprise metal sheets, pieces of metal sheet, tubes, profiled rods, scooping elements or the like.

34. The reactor as claimed in at least one of claims 15 to 33, **characterized in that** an annular disk reactor or disk-cage reactor (39) and/or an SSP (solid state polycondensation) is provided as end reactor downstream of the reactor (1).

## Revendications

1. Procédé de préparation de polymères en continu, **caractérisé en ce que** la préparation des monomères et des polymères a lieu dans un réacteur debout qui présente au moins deux zones de réaction disposées l'une au-dessus de l'autre dans le sens vertical et dont au moins l'une présente un réacteur à disque annulaire et ou un réacteur à cage et à disque.

2. Procédé selon la revendication 1, **caractérisé en ce qu'**un réacteur final (39) est raccordé en aval.

3. Procédé selon la revendication 1 ou 2, **caractérisé en ce qu'**un étage de polycondensation à l'état solide ("solid state polycondensation" - SSP) est raccordé en aval.

4. Procédé selon au moins l'une des revendications précédentes, **caractérisé en ce que** l'on y prépare des polycondensats et/ou des polyesters.

5. Procédé selon au moins l'une des revendications précédentes, **caractérisé en ce qu'**au moins une matière première est injectée directement dans le réacteur (1).

6. Procédé selon au moins l'une des revendications précédentes, **caractérisé en ce qu'**au moins une matière première est injectée directement dans le réacteur (1) sous la forme d'un mélange pâteux.

7. Procédé selon au moins l'une des revendications précédentes, **caractérisé en ce qu'**au moins entre deux zones de réaction, l'écoulement de matière à l'intérieur du réacteur debout (1) s'effectue dans la direction de la force de la gravité.

8. Procédé selon au moins l'une des revendications précédentes, **caractérisé en ce qu'**au moins entre deux zones de réaction, l'écoulement de matière à l'intérieur du réacteur (1) s'effectue en opposition à la force de la gravité.

9. Procédé selon au moins l'une des revendications précédentes, **caractérisé en ce que** la préparation du ou des monomère(s) s'effectue dans une zone de réaction (A) située au-dessus du milieu du réacteur (1) et **en ce que** la préparation du polymère s'effectue en dessous du milieu du réacteur (1).

10. Procédé selon au moins l'une des revendications précédentes, **caractérisé en ce que** la préparation du ou des monomère(s) s'effectue dans une zone de réaction (A) située en dessous du milieu du réacteur (1) et **en ce que** la préparation du polymère s'effectue au-dessus du milieu du réacteur (1).

11. Procédé selon au moins l'une des revendications précédentes, **caractérisé en ce qu'**une réaction finale a lieu dans le réacteur final (39) raccordé en aval.

12. Procédé selon au moins l'une des revendications précédentes, **caractérisé en ce que** les zones individuelles de réaction (A, B, C) travaillent à des pressions et des températures différentes.

13. Procédé selon au moins l'une des revendications précédentes, **caractérisé en ce qu'**avant de rentrer dans la ou dans les zone(s) de réaction qui permettent la conversion en polymères, les monomères sont chauffés à la température de réaction nécessaire.

14. Procédé selon au moins l'une des revendications précédentes, **caractérisé en ce qu'**après être entrés dans la ou dans les zone(s) de réaction qui permettent la conversion en polymères, les monomères sont chauffés à la température de réaction nécessaire par des échangeurs de chaleur situés à l'intérieur.

15. Réacteur debout en vue de la mise en oeuvre du procédé selon les revendications 1 à 14, **caractérisé en ce que** le réacteur (1) est divisé en au moins deux zones de réaction situées l'une au-dessus de l'autre et dont au moins l'une présente un réacteur à disque annulaire et/ou un réacteur à disque et à cage et que les zones individuelles de réaction (A, B, C) peuvent être travaillées à des pressions et des températures différentes.

16. Réacteur selon la revendication 15, **caractérisé par** plusieurs zones de chauffage dotées de dispositifs intérieurs ou extérieurs de chauffage ou de refroidissement.

17. Réacteur selon la revendication 15 ou 16, **caractérisé en ce que** des dispositifs (46) qui empêchent que les particules de produit soient entraînées dans les condenseurs raccordés en aval sont prévus dans un ou plusieurs étage(s) de réaction.

18. Réacteur selon au moins l'une des revendications 15 à 17, **caractérisé en ce que** des organes de brassage (5, 6) montés d'un côté ou des deux côtés sont prévus dans une ou plusieurs zone(s) de réaction du réacteur.

19. Réacteur selon au moins l'une des revendications 15 à 18, **caractérisé en ce qu'**une des zones de réaction et en particulier la zone de réaction la plus basse est réalisée sous la forme d'un réacteur à disque annulaire ou d'un réacteur (20) à disque et à cage.

20. Réacteur selon au moins l'une des revendications 15 à 19, **caractérisé en ce que** dans la zone (20) du réacteur à disque annulaire ou à disque et à cage, la paroi du réacteur est réalisée sous la forme d'une demi-sphère ou d'une partie d'une demi-sphère (7).

21. Réacteur selon la revendication 20, **caractérisé en ce que** la demi-sphère ou des parties de la demi-sphère (7) sont dotées de cloisons de séparation et/ou de chicanes de débordement (8).

22. Réacteur selon au moins l'une des revendications 15 à 21, **caractérisé en ce que**, lorsque la zone (20) à disque annulaire ou à disque et à cage est réalisée sous la forme d'une demi-sphère (7), une entrée de produit (9) est disposée dans la partie extérieure et l'évacuation (10) du produit terminé est disposée au centre.

23. Réacteur selon au moins l'une des revendications 15 à 22, **caractérisé en ce que** lorsque la zone (20) à disque annulaire ou à disque et à cage est réalisée sous la forme d'une demi-sphère (7), une entrée de produit (9) s'effectue en deux ou plusieurs endroits de la partie extérieure.

24. Réacteur selon au moins l'une des revendications 15 à 23, **caractérisé en ce que** les cloisons de séparation et/ou les chicanes de débordement (8) possèdent des dispositifs de fonctionnement à vide qui permettent un vidage complet.

25. Réacteur selon au moins l'une des revendications 15 à 24, **caractérisé en ce que** des arbres (11), des cylindres creux (cage) ou des longerons (14) dotés d'éléments de brassage (15) sont prévus comme organes de brassage (5) dans le réacteur (20) à disque annulaire ou à disque et à cage.

26. Réacteur selon au moins l'une des revendications 15 à 25, **caractérisé en ce que** les longerons (14) sont ronds et/ou profilés.

27. Réacteur selon au moins l'une des revendications 15 à 26, **caractérisé en ce que** des perforations sont prévues dans les longerons (14) ou dans les cylindres creux (12).

28. Réacteur selon au moins l'une des revendications 15 à 27, **caractérisé en ce que** comme éléments de brassage (15) sont prévus des moyens de mélange géométriques, en particulier des disques annulaires, des segments annulaires, des profilés en forme d'éléments à godets, des éléments à godets disposés sur des disques annulaires ou sur des pièces géométriques, ou similaires.

29. Réacteur selon au moins l'une des revendications 15 à 28, **caractérisé en ce que** les moyens de mélange utilisés comme éléments de brassage (15) sont disposés perpendiculairement ou obliquement, avec une pente identique ou différente, sur l'arbre (11), le cylindre creux (12) ou le bâti porteur (14).

30. Réacteur selon au moins l'une des revendications 15 à 29, **caractérisé en ce que** les moyens de mélange utilisés comme éléments de brassage (15) sont disposés les uns par rapport aux autres à des distances identiques ou différentes.

31. Réacteur selon au moins l'une des revendications 15 à 30, **caractérisé en ce que** les moyens de mélange utilisés comme éléments de brassage (15) sont entièrement lisses ou sont dotés de perforations (16).

32. Réacteur selon au moins l'une des revendications 15 à 31, **caractérisé en ce que** les moyens de mélange utilisés comme éléments de brassage (15) sont disposés à l'intérieur, à l'extérieur ou à l'intérieur et à l'extérieur des longerons (14) ou du cylindre creux (12).

33. Réacteur selon au moins l'une des revendications 15 à 32, **caractérisé en ce que** les moyens de mélange utilisés comme éléments de brassage (15) sont réalisés entre autres en tôles, en pièces de tôle, en tubes, en barreaus profilé, en éléments à godet.

34. Réacteur selon au moins l'une des revendications 15 à 33, **caractérisé en ce qu'**un réacteur à disque annulaire ou un réacteur à disque et à cage (39) et/ou un SSP (étage de polycondensation à l'état solide) sont raccordés en aval du réacteur (1) comme réacteur final.
